# EUROPEAN PATENT SPECIFICATION

(11) **EP 1 799 030 B1**
(45) Date of publication and mention of the grant of the patent: **15.07.2009**
(21) Application number: 05747392.8
(22) Date of filing: 13.05.2005
(51) Int. Cl.: A01K 11/00, B41M 5/26, G09F 3/02, B41M 5/00

(54) **IMPROVEMENTS IN ANIMAL IDENTIFICATION MARKING**
VERBESSERUNGEN BEI TIERIDENTIFIZIERUNGSMARKIERUNG
AMELIORATION DU MARQUAGE D'IDENTIFICATION DES ANIMAUX

(30) Priority: 14.05.2004 NZ 53293104
(43) Date of publication of application: 27.06.2007
(73) Proprietor: Allflex New Zealand Limited, Palmerston North 4414 (NZ)
(72) Inventor: HOPKINS, Donald, Leslie, Palmerston North (NZ); RUTHERFORD, John, Clifford, Papamos Beach 3118 (NZ)
(74) Representative: Ravina, Bernard
(86) International application number: PCT/NZ2005/000098
(87) International publication number: WO 2005/110073

(56) References cited:
- WO-A1-02/43034
- US-A1- 2002 088 154
- US-A1- 2002 090 479
- DATABASE WPI Week 199931, Derwent Publications Ltd., London, GB; Class A85, AN 1999-366185, XP008093260 & JP 11 139052 A (KONICA CORP) 25 May 1999

## Description

### Background to the Invention

This invention relates to improvements in animal identification marking.

Visual identification of an animal by a label carried on the animal is well known. Most commonly the label is in the form of a tag which, in use, is applied to the ear of the animal.

The so-called ear tag has a panel portion on which identification indicia is marked. The indicia can be marked by hot foil stamping or laser ink printing on the surface of the tag or can be marked into the tag by laser marking.

Because the identification indicia is normally read at a distance it is desirable that the indicia contrasts with the colour of the panel and has permanency.

An advantage of laser marking is that it is permanently imbedded in the tag but contrast with the background material of the tag is generally not as stark as with laser ink printing or hot foil stamping.

A problem with hot foil stamping is that the laser ink printing can deteriorate over time. One of the reasons for this is that in use abrasive contact can occur with the panel surface thereby resulting in the marking deteriorating. This deterioration can occur to the point of the indicia being difficult to read or in extremes cases, worn away either in part or entirely.

In WO 98/48398 there is described a procedure whereby a tag is marked with laser marking and at least some of the laser marking overprinted by laser ink printing or hot foil stamping. In this way good contrast can be achieved but if any of the surface printing (laser ink or hot foil) is worn away or deteriorates, the laser marking becomes visible, hence retaining the important indicia on the tag.

A further problem with animal ear tags, which can reduce the ability to easily read the identification indicia, is caused by the indicia bearing surface of the tag becoming dirty. The environment in which the ear tag is used can often result in extraneous material coming into contact with and adhering to the identification area of the tag.

With modern day ear tags, it is common for the tag to be manufactured with the surface of the tag matt or slightly rough in texture. This aids in adhesion or keying of the printed indicia on the surface of the tag. However, the matt or slightly rough texture increases the risk of extraneous material, dirt etc adhering to the tag surface, thus, impairing the contrast between indicia and background colours of the tag or visibility of the indicia.

In WO 02/ 43034, there is described a procedure whereby an animal ear tag is laser marked with an indicia. The contrast between the indicia and the surrounding surface of the tag is enhanced by heating the indicia following laser marking to a temperature at which the indicia and surface material have melted.

In JP 11 139 052 a method for manufacturing an identification card is proposed in which an image transfer is performed by heat-transfer. Prior to recording the image, the surface of the image-receiving layer is smoothed by a nipping device, inserted between a heat press and a blanking part. This method especially developed for transferring an image on an IC sheet is not suitable for ear tag fabrication.

### SUMMARY OF THE INVENTION

An object of the present invention is to provide an animal identification label marking system, which goes some way to providing an indicia bearing surface to which surface dirt or extraneous material is less likely to adhere or become attracted to.

Broadly according to one aspect of the present Invention there is provided a method for marking an animal identification label, the method including, after moulding the label, the steps of heating a surface of the label to thereby create a gloss surface thereon and then applying indicia marking and/or printing to the surface.

In a preferred form of the Invention the indicia is applied when the surface still retains residual heat from the heating process.

In a preferred form of the invention the surface is permitted to cool following which laser marking is used to apply the indicia.

In a preferred form of the invention the surface while still retaining residual heat has indicia applied thereto by laser marking and then at least some of this indicia is overmarked with laser ink printing.

In the preferred form of the invention the heating of the surface is achieved by bringing a heated surface into contact with the said surface of the label.

In the preferred form of the invention the heated surface makes contact with the surface of the label under pressure. This can, according to one form of the invention, be achieved by use of a press.

### DESCRIPTION OF PREFERRED EMBODIMENT OF THE INVENTION

In accordance with known animal identification labels and more particularly animal identification ear tags, the tag Incorporates a panel on which identification indicia can be applied. As mentioned above, the method of application of the indicia can vary and can include hot foil stamping or laser printing onto the surface of the tag or laser marking into the tag substrate. All of this is in accordance with known animal identification technology and does not require further description for the purposes of the present invention.

According to the present invention an animal identification label such as an ear tag is moulded with a surface on which the identification indicia can be applied. The tag or more particularly the part of the tag having the surface on which identification indicia will be applied is heated. This can be achieved by the tag part located within a press device.

According to one arrangement the indicia bearing portion of the tag can be located on an anvil. A heated block is then moved into contact with the portion of the tag on the anvil and is held there for about two seconds. The block is heated to 200°C before being pressed onto the surface of the portion of the tag.

After the aforesaid two-second period the heated block is retracted away from the tag and the tag is released from the press. The surface of the tag with which the heated plate has been in contact will have a gloss surface.

In a commercial form of the system a plurality of tags are delivered to the press by way of a conveyor. The tags are placed on a trolley on the conveyor, this trolley moving into and stopping within the press. In the preferred form of the invention the press is pneumatically operated.

The heated block then comes down and engages the uppermost or exposed surface of the tags on the trolley for about two seconds. The trolley of tags, which has just been heated by the heated block, is released from the press and continues onto a printing station.

In the preferred form of the invention the heating of the surface on which the indicia is to be marked, is heated to a temperature to melt the surface and thereby achieve the gloss finish. While it is preferred that that temperature be in the order of 200°C temperatures either side of this, which achieve the gloss finish, but without any damage to the tag can be used. Such damage, could for example, arise from the tag surface being burnt or the melting being excessive.

In a preferred form of the invention the material of the tag to the side of the tag opposite that of the surface on which the indicia is to be marked, can also be heated but to a lesser temperature than that of the surface on which the indicia is to be applied. In this way the tag panel can be prevented from curling i.e. the tag panel is kept flat.

To enhance the gloss finish of the tag surface, the heated plate or block can be provided with a gloss finish.

According to an alternative arrangement, a gloss paper can be located between the heated block and the tag surface. Once the heated block has retracted, the gloss paper can be replaced by a new section of gloss paper. Thus, in one form of the invention, the gloss paper can be in roll form so that after a tag has been heated, the roll of gloss paper can be wound on i.e. indexed, so that a new section of gloss paper is ready for the next tag or quantity of tags to be heated.

According to one form of the invention, the tag after being heated to achieve the gloss surface is left to cool. The cooling can be back to ambient temperature or could be to a temperature significantly less than the temperature achieved during the melting of the tag surface to achieve the gloss surface. The thus cooled tag can then undergo laser marking to apply indicia to the tag.

In another form of the invention, indicia is applied to the tag immediately after the heating step. Thus, the indicia is applied while the tag is still above ambient temperature.

In a preferred form of the invention, the indicia can be applied by laser ink printing. In a more preferred form of the invention the indicia is applied by laser marking followed by at least some of the laser marked indicia being overprinted by laser ink printing.

The process according to the present invention can take place at some time after manufacture of the tag or could occur more or less immediately after manufacture of the tag. According to this process, the tag would be moulded and then passed to the heating press for application of the gloss surface. Following this, the tag could either be left to cool for laser marking to take place at some later time or could immediately have indicia applied thereto by laser ink printing or a combination of laser marking and laser ink printing.

The time between moulding of the tag and application of the heated block to create the gloss surface may need to involve a period of time such that the melting of the surface of the tag does not have any adverse affect on the tag as a whole. Thus, there might need to be a period of time (which tests and experience will determine) between moulding of the tag and the application of heat to the surface of the panel of the tag in order to apply the gloss surface.

The invention is open to modification as will be appreciated by those skilled in the art. For example, the heated block or the gloss paper, could be provided with a non-stick surface so as to ensure that no sticking occurs between the block and the tag.

Also as will be appreciated by those skilled in the art, the heating to melt the surface of the tag could take place using means other than a heated block. For example, the heating could be applied by way of air directed onto the surface of the tag on which the indicia will be applied.

In the preferred form of the invention the material of the tag to the side of the tag opposite that of the surface on which the indicia is to be marked, can also be heated but to a lesser temperature than that of the surface on which the indicia is to be applied.

It will be appreciated by those skilled in the art that control gear will be provided for indexing of each trolley of tags into the press and released therefrom. The control gear will also provide for control of the heating of the block and the time during which the heated block stamps the marked surface of the tags on the trolley. The necessary pressure applied to the tag will also be controlled by the control gear.

The aforementioned process results in the tags or at least that part of the tags, which bear identification indicia being provided with a gloss finish. This gloss finish aids in marking retention as well as keeping the tag clean when In use. Also the gloss finish ensures a good clear contrast between the indicia and the background material of the tag during use of the tag.

It has also been surprisingly discovered that the process leads to increased adhesion of the laser ink printing. This is of a beneficial effect as it leads to increased abrasion resistance thereby resulting in longer life of the printed indicia.

Furthermore, the laser marked indicia is enhanced as it takes on more contrast with the background colour of the tag.

## Claims

1. A method for marking an animal identification label, **characterized in that** it includes, after a first step of moulding the label, the steps of creating a gloss surface thereon by heating to a temperature to melt said surface, and then applying indicia marking and/or printing to the surface.

2. The method of claim 1 wherein the indicia is applied when the surface of the label still retains residual heat from the heating process.

3. The method of claim 1 wherein the surface of the label is permitted to cool following which laser marking is used to apply the indicia.

4. The method of claim 1 wherein the surface of the label while still retaining residual heat has indicia applied thereto by laser marking and then at least some of this indicia is overmarked with laser ink printing.

5. The method of any one of claims 1 to 4 wherein the heating of the surface of the label is achieved by bringing a heated surface into contact with said surface of the label.

6. The method of claim 5 wherein the heated surface makes contact with the surface of the label under pressure.

7. The method of claim 6 wherein the contacting of the heated surface and surface of the label is achieved by use of a press.

8. The method of claim 7 wherein the part of the label having the surface on which indicia is to be placed is located on an anvil, heated block is moved into contact with said port of the label on the anvil and is held there for a suitable period of time in the order of about two seconds.

9. The method of claim 7 or 8 wherein the heated surface is at a temperature of 200 °C prior to contacting the surface of the portion of the tag.

10. The method of claim 9 wherein a plurality of labels are placed on a trolley on the conveyor and then moved on the trolley into the press.

11. The method of any one of claims 5 to 10 wherein the heated surface is provided with a gloss finish.

12. The method of any one of claims 5 to 10 wherein a gloss paper is located between the heated surface block and the surface of the label during heating of the surface of the label.

13. The method of any one of claims 1 to 12 wherein the material of the label to the side of the label opposite that of the surface on which the indicia is to be marked, is also heated but to a lesser temperature than that of the surface on which the indicia is to be applied.

14. The method of claim 3 wherein the cooling is to ambient temperature or a temperature significantly less than the temperature achieved during the heating of the surface of the label.

15. The method of any one of claims 1 to 14 wherein the indicia is applied by laser marking.

16. The method of claim 1 5 wherein at least some of the laser marked indicia is overprinted by laser ink printing.

17. The method of any one of the preceding claims wherein the surface of the label is heated following the moulding of the label following which the label is either left to cool for marking to take place at some later time or could immediately have indicia applied thereto.

18. The method of claim 11 or 12 wherein the heated surface or the gloss paper is provided with a non-stick surface.

19. The method of any one of the preceding claims wherein the heating of the surface of the label is by application of heated air directed onto the surface of the label.

## Patentansprüche

1. Verfahren zur Markierung einer Tiererkennungsmarke, **dadurch gekennzeichnet, dass** es, nach einem ersten Schritt der Formgebung der Marke, die Schritte des Erzeugens einer darauf befindlichen Glanzoberfläche durch Erhitzen auf eine Temperatur, welche die Oberfläche zum Schmelzen bringt, und anschließend des Aufbringens eines Markierungszeichens und/oder des Bedruckens der Oberfläche, umfasst.

2. Verfahren nach Anspruch 1, wobei das Zeichen aufgebracht wird, wenn die Oberfläche der Marke noch Restwärme aus dem Erhitzungsvorgang speichert.

3. Verfahren nach Anspruch 1, wobei die Oberfläche der Marke abkühlen gelassen wird, woraufhin das Zeichen durch Lasermarkierung aufgebracht wird.

4. Verfahren nach Anspruch 1, wobei die Oberfläche der Marke durch Lasermarkierung mit einem Zeichen versehen wird, während sie noch Restwärme speichert, woraufhin dieses Zeichen zumindest teilweise im Laserdruckverfahren überschrieben wird.

5. Verfahren nach einem beliebigen der Ansprüche 1 bis 4, wobei die Oberfläche der Marke erhitzt wird, indem eine erhitzte Oberfläche mit der Oberfläche der Marke in Kontakt gebracht wird.

6. Verfahren nach Anspruch 5, wobei der Kontakt zwischen der erhitzten Oberfläche und der Oberfläche der Marke unter Druck hergestellt wird.

7. Verfahren nach Anspruch 6, wobei der Kontakt zwischen der erhitzten Oberfläche und der Oberfläche der Marke unter Verwendung einer Presse hergestellt wird.

8. Verfahren nach Anspruch 7, wobei der Teil der Marke, welcher die Oberfläche aufweist, auf die das Zeichen aufgebracht werden soll, sich auf einem Amboss befindet, ein erhitzter Block durch einen Bewegungsvorgang mit dem Teil der Marke, der sich auf dem Amboss befindet, in Kontakt gebracht wird und dort für eine zweckmäßige Zeitdauer in der Größenordnung von ungefähr zwei Sekunden belassen wird.

9. Verfahren nach den Ansprüchen 7 oder 8, wobei die erhitzte Oberfläche, bevor sie mit der Oberfläche des Markenabschnitts in Kontakt kommt, eine Temperatur von 200 °C hat.

10. Verfahren nach Anspruch 9, wobei sich mehrere Marken auf einem Wagen auf einer Fördervorrichtung befinden und dann auf dem Wagen in die Presse befördert werden.

11. Verfahren nach einem beliebigen der Ansprüche 5 bis 10, wobei die erhitzte Oberfläche mit einer Glanzbeschichtung versehen wird.

12. Verfahren nach einem beliebigen der Ansprüche 5 bis 10, wobei sich während des Erhitzens der Oberfläche der Marke ein Glanzpapier zwischen dem Block mit der erhitzten Oberfläche und der Oberfläche der Marke befindet.

13. Verfahren nach einem beliebigen der Ansprüche 1 bis 12, wobei der Werkstoff der Marke, der sich auf der gegenüberliegenden Seite der Oberfläche befindet, welche mit dem Zeichen markiert werden soll, ebenfalls erhitzt wird, aber auf eine geringere Temperatur als die Oberfläche, die mit dem Zeichen versehen werden soll.

14. Verfahren nach Anspruch 3, wobei auf eine Temperatur abgekühlt wird, die der Umgebungstemperatur entspricht, oder eine Temperatur, die deutlich geringer ist als die Temperatur, die während des Erhitzens der Oberfläche der Marke erreicht wurde.

15. Verfahren nach einem beliebigen der Ansprüche 1 bis 14, wobei das Zeichen durch Lasermarkierung aufgebracht wird.

16. Verfahren nach Anspruch 15, wobei das lasermarkierte Zeichen zumindest teilweise im Laserdruckverfahren überschrieben wird.

17. Verfahren nach einem beliebigen der vorhergehenden Ansprüche, wobei die Oberfläche der Marke nach der Formgebung der Marke erhitzt wird, woraufhin die Marke entweder abkühlen gelassen wird, um sie zu einem späteren Zeitpunkt zu markieren, oder das Zeichen unverzüglich aufgebracht wird.

18. Verfahren nach den Ansprüchen 11 oder 12, wobei die erhitzte Oberfläche oder das Glanzpapier mit einer Antihaftbeschichtung versehen werden.

19. Verfahren nach einem beliebigen der vorhergehenden Ansprüche, wobei die Oberfläche der Marke erhitzt wird, indem erhitzte Luft auf die Oberfläche der Marke gelenkt wird.

## Revendications

1. Procédé de marquage d'une étiquette d'identification d'un animal, **caractérisé en ce qu'**il comprend, après une première étape de moulage de l'étiquette, les étapes de création d'une surface brillante sur cette étiquette par chauffage à une température apte à faire fondre ladite surface, et d'application par le signe de marquage et/ou d'impression sur sa surface.

2. Procédé selon la revendication 1 selon laquelle le texte est appliqué lorsque la surface de l'étiquette conserve une chaleur résiduelle en conséquence du processus de chauffage.

3. Procédé selon la revendication 1 par laquelle la surface de l'étiquette est laissée à refroidir en suite de quoi le texte est appliqué par marquage au laser.

4. Procédé selon la revendication 1 par laquelle la surface de l'étiquette qui conserve une chaleur résiduelle se voit appliquer le texte par un marquage au laser puis au moins une partie du texte est sur-imprimée avec de l'encre par une impression laser

5. Procédé selon l'une quelconque des revendications 1 à 4 par laquelle la chauffe de la surface de l'étiquette est réalisée en amenant une surface chaude au contact de ladite surface de l'étiquette.

6. Procédé selon la revendication 5 par laquelle la surface chaude entre en contact avec la surface de l'étiquette sous pression.

7. Procédé selon la revendication 6 par laquelle le contact entre la surface chaude et la surface de l'étiquette est réalisé par l'utilisation d'une presse.

8. Procédé selon la revendication 7 par laquelle la partie de l'étiquette ayant la surface qui va recevoir le texte est positionnée sur une enclume, le bloc chauffé est mis au contact avec ledit port de l'étiquette sur l'enclume et y est maintenu pendant une période de temps de l'ordre de deux secondes.

9. Procédé selon la revendication 7 ou 8 par laquelle la surface chaude est à une température de 200°C avant de rentrer en contact avec la surface de la partie de l'étiquette.

10. Procédé selon la revendication 9 par laquelle une pluralité d'étiquettes sont positionnées sur un chariot sur le convoyeur puis déplacées sur le chariot dans la presse.

11. Procédé selon l'une quelconque des revendications 5 à 10 par laquelle la surface chaude bénéficie d'une finition brillante.

12. Procédé selon l'une quelconque des revendications 5 à 10 par laquelle un papier glacé est positionné entre le bloc de la surface chaude et la surface de l'étiquette pendant la chauffe de la surface de l'étiquette.

13. Procédé selon l'une quelconque des revendications 1 à 12 par laquelle le matériau de l'étiquette sur le côté de l'étiquette opposé à celui de la surface sur laquelle le texte doit être appliqué, est également chauffé mais à une température inférieure à celle de la surface sur laquelle le texte doit être appliqué.

14. Procédé selon la revendication 3 par laquelle le refroidissement se fait à la température ambiante ou à une température significativement inférieure à la température atteinte pendant la chauffe de la surface de l'étiquette.

15. Procédé selon l'une quelconque des revendications 1 à 14 par laquelle le texte est appliqué par marquage laser.

16. Procédé selon la revendication 15 par laquelle au moins une partie du texte marqué au laser est sur-imprimée par une impression laser à l'encre.

17. Procédé selon l'une quelconque des revendications précédentes par laquelle la surface de l'étiquette est chauffée suite au moulage de l'étiquette en suite de quoi l'étiquette est laissée à refroidir pour le marquage à un moment ultérieur ou se voit appliquer immédiatement le texte.

18. Procédé selon la revendication 11 ou 12 par laquelle la surface chaude ou le papier glacé est muni d'une surface non collante.

19. Procédé selon l'une quelconque des revendications précédentes par laquelle la chauffe de la surface de l'étiquette se fait par application d'air chaud dirigé sur la surface de l'étiquette.
